(19) Europäisches Patentamt

European Patent Office

Office européen des brevets

(11) **EP 0 748 555 B1**

(12) **FASCICULE DE BREVET EUROPEEN**

(45) Date de publication et mention
de la délivrance du brevet:
**06.07.2005 Bulletin 2005/27**

(51) Int Cl.⁷: **H04M 9/08**

(21) Numéro de dépôt: **95943285.7**

(22) Date de dépôt: **27.12.1995**

(86) Numéro de dépôt international:
**PCT/FR1995/001743**

(87) Numéro de publication internationale:
**WO 1996/021313 (11.07.1996 Gazette 1996/31)**

(54) **ANNULEUR D'ECHO ACOUSTIQUE AVEC FILTRAGE EN SOUS-BANDES**

AKUSTISCHER ECHOKOMPENSATOR MIT FILTERUNG IN FREQUENZTEILBÄNDERN

ACOUSTIC ECHO SUPPRESSOR WITH SUBBAND FILTERING

(84) Etats contractants désignés:
**AT BE CH DE DK ES FR GB GR IE IT LI LU MC NL PT SE**

(30) Priorité: **30.12.1994 FR 9415951**

(43) Date de publication de la demande:
**18.12.1996 Bulletin 1996/51**

(73) Titulaire: **NORTEL NETWORKS France
78117 Châteaufort (FR)**

(72) Inventeurs:
- **BOUDY, Jérôme
F-78330 Fontenay-le-Fleury (FR)**
- **CAPMAN, François
F-78000 Versailles (FR)**

(74) Mandataire: **Loisel, Bertrand et al
Cabinet Plasseraud
65/67 rue de la Victoire
75440 Paris Cedex 09 (FR)**

(56) Documents cités:
**EP-A- 0 333 581**

- **ICASSP 90, vol. 2, 3 - 6 Avril 1990, ALBUQUERQUE, NEW MAXICO,USA, pages 1145-1148, XP000146973 BIRGER HÄTTY: "Recursive least squares algorithms using multirate systems for cancellation of acoustical echoes"**
- **ICASSP-94, vol. 2, 19 Avril 1994 - 1922, ADELAIDE, SOUTH AUSTRALIA, pages 265-268, XP002001154 M.G. SIQUEIRA ET AL.: "New adaptive-filtering techniques applied to speech echo cancellation"**
- **1992 IEEE INTERNATIONAL SYMPOSIUM ON CIRCUITS AND SYSTEMS, vol. 4/6, 10 Mai 1992, SAN DIEGO, CA USA, pages 1918-1921, XP000338368 R.WEHRMANN: "Concepts of improving hands-free speech communication"**
- **PROCEEDINGS OF EUSIPCO-88 , vol. 2, 5 - 8 Septembre 1988, GRENOBLE, FRANCE, pages 491-494, XP000186362 A.GILLOIRE ET AL.: "Achieving the control of the acoustic echo in audio terminals"**

**Description**

La présente invention concerne les annuleurs d'écho destinés à être utilisés dans les installations téléphoniques. Elle trouve une application particulièrement importante dans les installations susceptibles de comporter des terminaux "mains libres" ou portables. Parmi ces installations, on peut notamment citer les systèmes de radiotéléphonie cellulaires numériques, les terminaux de visiophonie en bande étroite (8 Khz) et élargie (16 Khz), les terminaux du réseau filaire classique.

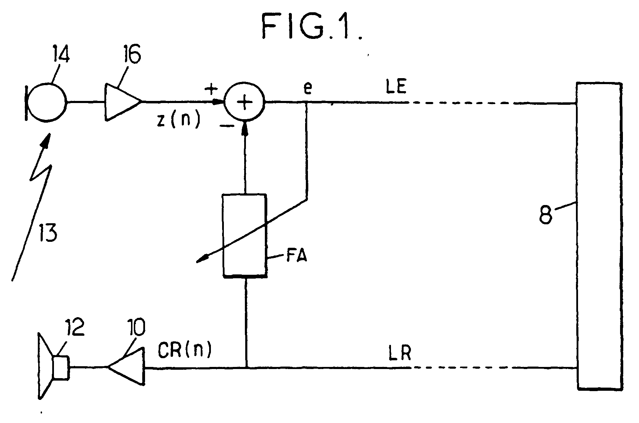

Le principe d'un annuleur d'écho est illustré en figure 1 de la présente demande. La figure 1 montre un terminal "proche", qui peut être un poste de téléconférence, un combiné téléphonique "mains libres", etc....Le signal x entrant par une ligne de réception LR et provenant d'un terminal éloigné 8 est amplifié par un amplificateur 10, puis diffusé par un haut-parleur 12. Les ondes sonores provenant du haut-parleur 12 sont transmises par couplage acoustique (schématisé par un trajet 13) vers un ou des microphones 14 destinés à recevoir la parole du locuteur. Le microphone 14 est relié à un amplificateur 16 et le signal de sortie z est transmis, par une ligne d'émission LE, vers le terminal éloigné. Le locuteur "éloigné" placé à ce terminal éloigné 8 entendra en conséquence non seulement ce qui lui est éventuellement destiné, mais aussi un écho de ses propres paroles, avec un retard lié à la durée de transmission par les canaux LE et LR, perturbé par la fonction de transfert du trajet acoustique 13.

L'annuleur d'écho comporte un filtre adaptatif FA qui reçoit le signal d'entrée x et dont la sortie attaque l'entrée soustractive d'un soustracteur 18 dont l'entrée additive reçoit la sortie de l'amplificateur 16. Les coefficients du filtre FA sont automatiquement adaptés à partir du signal d'erreur e émis sur la ligne LE, égal à la différence entre le signal z (constitué par l'écho en l'absence de signal utile) et la sortie de filtre. En l'absence de parole du locuteur au terminal équipé, le signal d'erreur est constitué par un simple résidu d'écho. Souvent l'annuleur d'écho est muni d'un détecteur de présence de parole du locuteur proche, appelé détecteur de double parole (en abrégé DIP), qui bloque ou ralentit l'adaptation du filtre FA pendant que le locuteur local parle, pour éviter qu'il soit perturbé par la parole locale.

En général, les filtres des annuleurs d'écho des installations téléphoniques sont des filtres numériques adaptatifs transverses utilisant un algorithme simple, tel que l'algorithme du gradient ou plus fréquemment l'algorithme du gradient stochastique normalisé, dit NLMS.

Un problème majeur dans la réalisation d'un annuleur d'écho est dû au grand nombre de coefficients requis pour tenir compte de la longueur de la réponse impulsionnelle du trajet 13 dans toute la bande téléphonique. Plusieurs milliers de coefficients sont nécessaires pour la fréquence d'échantillonnage courante de 8 Khz (bande étroite) ou 16 Khz (bande élargie). Pour rendre le volume de calcul compatible avec la puissance de calcul des processeurs de signaux numériques disponibles, on a proposé de fractionner la bande passante dans laquelle l'annulation d'écho est à effectuer en plusieurs sous-bandes, traitées chacune par une voie ayant un filtre d'analyse, un annuleur affecté à la sous-bande et un filtre de synthèse.

Cette approche se heurte à des difficultés. Ou bien les filtres sont prévus pour que les sous-bandes soient séparées, pour éviter les effets du repliement de spectre dans chaque sous-bande, ce qui se traduit par la présence de brèches dans le spectre du signal reconstitué par combinaison des sorties des bancs de synthèse. Ou bien on adopte une fréquence de sous-échantillonnage d'alimentation des sous-bandes qui est supérieure à la fréquence critique de sous-échantillonnage ou décimation afin de former des bandes de garde qui évitent les repliements de spectre, mais cela augmente notablement la vitesse de calcul requise. Ou bien encore on admet un recouvrement latéral des sous-bandes et on tient compte de la contribution des sous-bandes adjacentes dans chaque voie affectée à une sous-bande. Cette dernière solution (US-A-4 956 838) donne des résultats satisfaisants, mais elle a l'inconvénient de compliquer notablement la constitution de l'annuleur d'échos.

On sait par ailleurs que les algorithmes utilisés habituellement dans les annuleurs d'échos, et en particulier l'algorithme du gradient stochastique, laissent subsister un écho résiduel appréciable dans un environnement bruité.

On connaît un certain nombre d'algorithmes de filtrage permettant en théorie de réduire l'erreur résiduelle. On connaît en particulier l'algorithme des moindres carrés récursif, ou RLS, qui donne de meilleures performances que l'algorithme NLMS couramment utilisé en annulation d'échos. Il a en contre partie l'inconvénient d'être complexe et de présenter des zones d'instabilité. Pour ces raisons, il n'a pas été implanté dans des annuleurs d'échos acoustique, du fait notamment que la complexité de mise en oeuvre exigerait un matériel important et des durées de calcul incompatibles avec les retards acceptables dans les communications téléphoniques. Par exemple, suivant la norme européenne GSM de téléphonie cellulaire numérique, le temps maximal de traitement autorisé dans une station est de 0.1 s.

On connaît également la mise en oeuvre d'une version rapide de l'algorithme des moindres carrés (Fast Recursive Least Square) pour l'annulation d'écho d'un signal fractionné en plusieurs sous bandes (« Recursive least squares algorithms using multirate systems for cancellation of acoustical echoes », ICASSP 90, vol. 2, 3 - 6 avril 1990, Albuquerque, US, pages 1145 - 1148, B. Hatty).

La présente invention vise à fournir un annuleur d'écho permettant de réduire e à une valeur très faible et cependant ayant une complexité et un temps de traitement acceptables.

Pour cela, il a été nécessaire tout d'abord de faire un certain nombre de constatations.

La première constatation est qu'il est possible de réduire notablement la complexité des calculs en combinant l'utilisation d'une version rapide de l'algorithme des moindres carrés à décomposition QR, ayant des propriétés numériques particulièrement satisfaisantes (robustesse à la précision finie, stabilité) tout en maintenant l'efficacité de l'algorithme des moindres carrés, et un traitement en sous-bandes, alimentées chacune par sous-échantillonnage. Cet avantage est particulièrement net si on utilise un algorithme récursif sur l'ordre. La seconde est que l'algorithme QR a une efficacité telle que la contribution des sous-bandes latérales devient négligeable, même lorsque les bandes ont un recouvrement partiel qui évite la présence de brèches dans le spectre reconstitué sans pour autant nécessiter la complexité requise de filtres tenant compte de la contribution des sous-bandes latérales.

La présente invention propose en conséquence un annuleur d'écho tel que défini dans la revendication 1.

Toutes les solutions d'ordre intermédiaire sont également possibles. Le réseau peut notamment être un réseau GSM, un réseau RTC, etc ...

Très souvent, le phénomène d'écho n'a pas la même importance dans toutes les sous-bandes. Dans un certain nombre d'installations par exemple, le phénomène d'écho est beaucoup plus intense et doit être corrigé de façon beaucoup plus complète dans les sous-bandes basses ou dans les sous-bandes médianes. Dans ce cas, il est possible de n'utiliser des filtres mettant en oeuvre l'algorithme des moindres carrés à décomposition QR dans les sous-bandes les plus affectées d'écho, tandis que les filtres affectés aux autres sous-bandes mettent en oeuvre un algorithme plus simple, tel que l'algorithme du gradient stochastique NLMS, voire même l'algorithme du signe.

Dans la pratique, on utilisera un fractionnement de la bande téléphonique en un nombre de sous-bandes compris entre 4 et 8 pour des signaux en bande étroite (8 Khz) et quatre à seize pour des signaux en bande élargie (16 Khz). Au-delà de 8, on arrive à des taux de sous-échantillonnage trop faibles, pour des taux d'échantillonnage en pleine bande courants de 8 et 16 Khz (bande étroite et bande élargie). De plus le gain supplémentaire à espérer ne justifie pas la complexité accrue. La longueur totale des filtres (nombre de prises ou ordre des filtres) sera généralement comprise entre 64 et 300 dans le cas d'un terminal mains-libres placé dans un véhicule et entre 256 et 512 dans le cas d'un terminal mains-libres placé dans une salle, ceci dans le cas de signaux bande étroite. Pour des signaux en bande élargie (16 Khz) ces ordres de grandeur seront généralement doublés.

Il a en effet été constaté qu'au-delà de cette valeur la réduction des coûts à espérer ne diminuait que très lentement, sauf à adopter des filtres trois à quatre fois plus longs.

L'invention sera mieux comprise à la lecture de la description qui suit de modes particuliers de réalisation, donnés à titre d'exemples non limitatifs. La description se réfère aux dessins qui l'accompagnent, dans lesquels :

- la figure 1, déjà mentionnée, montre la constitution de principe d'un annuleur d'écho ;
- la figure 2 est un synoptique de principe montrant une constitution possible d'annuleur d'écho suivant l'invention ;

Avant de décrire l'invention, on rappellera des indications sur les annuleurs d'écho utilisés en téléphonie et les notation qui seront utilisées. On désigne par :

$x(n)$      le signal d'entrée à l'instant $t_n$ (échantillon n)

$z(n)$      l'écho

$e(n)$      le signal résiduel à l'instant n, en supposant qu'il n'y a pas parole locale (erreur résiduelle)

$h$      le filtre transverse d'annulation d'écho

$X_{n+1'N}(n)$      la matrice à n+1 lignes et N colonnes à l'instant n, de la forme :

$$X(n) = \begin{bmatrix} x(0) & 0 \ldots \ldots \ldots \ldots 0 \\ x(1) & x(0) \ldots \ldots \ldots 0 \\ & \ldots \ldots \ldots \ldots \\ x(n) & \ldots \ldots \ldots \ldots x_{n-N+1} \end{bmatrix}$$

$Z_{n+1},1(n)$ la matrice d'écho à l'instant n, de la forme

$$Z(n) = \left| \begin{array}{c} \lambda^{n/2} z(0) \\ \lambda^{(n-1)/2} z(1) \\ \lambda^{1/2} z(n-1) \\ \lambda z(n) \end{array} \right|$$

où $\lambda$ est un facteur d'oubli.

$E_{n+1,n}(n)$ la matrice colonne des signaux résiduels e (0),...,e(n)

Suivant l'algorithme classique des moindres carrés, dits RLS récursif, on cherche à minimiser, en l'absence de parole locale, l'estimateur de variance de sortie :

$$E(n) = \sum_{i=0}^{n} \lambda^{n-i} [z(i) - H^t(n) \cdot X(i)]^2$$

que l'on peut écrire sous la forme suivante, en utilisant une notation matricielle

$$E_{n+1,n}(n) = Z_{n+1,1}(n) - X_{n+1,N}(n) \cdot H$$

Comme on l'a indiqué plus haut, l'invention utilise une décomposition du signal d'entrée de type QR, qui met en oeuvre une matrice de transformation orthogonale Q (c'est-à-dire dont le produit par sa transposée est égal à la matrice identité), à n+1 lignes et n+1 colonnes, permettant de donner naissance à une matrice R(n) triangulaire haute à N lignes et N colonnes suivant la relation, à l'instant n :

$$Q_{n+1,\ n+1}(n) \cdot X_{n+1,N}(n) = \left[ \begin{array}{c} R_{N,N}(n) \\ O_{n-N+1,N} \end{array} \right] \qquad (2)$$

Cette transformation permettra de réaliser l'adaptation du filtre par un processus de mise à jour permanent de la décomposition QR.

La minimisation au sens des moindres carrés est effectuée en appliquant la transformation QR à l'équation (1) ; le calcul montre que la matrice orthogonale Q obéit à la relation de mise à jour suivante :

$$\left[ \begin{array}{cc} Q_{n,n}(n-1) & O_{n,1} \\ O^t_{n,1} & 1 \end{array} \right] X_{n+1,N}(n) = \left[ \begin{array}{c} \lambda^{1/2} R_{N,N}(n-1) \\ O_{n-N,N} \\ x(n) x(n-1) \dots x(n-N+1) \end{array} \right]$$

On voit qu'on peut obtenir la matrice Q(n) à partir de la matrice de transformation précédente estimée Q(n-1) et d'un ensemble de N rotations de Givens permettant d'éliminer la dernière ligne de la matrice de signal d'entrée :

$$Q_{n+1,n+1}(n) = \overset{\wedge}{Q}_{n+1,n+1}(n) \begin{bmatrix} Q_{n,n}(n-1) & 0_{n,1} \\ \\ 0^t_{n,1} & 1 \end{bmatrix} \qquad (4)$$

où Q(n) désigne le produit de N rotations de Givens consécutives :

$$Q_{n+1,n+1}(n) = Q\theta_{N-1}...Q\theta_Q$$

La rotation $\theta_i$ permet d'éliminer l'échantillon x (n-i) dans la matrice :

et finalement, en ne conservant que les lignes et colonnes concernant N rotations, on arrive à une formule de mise à Jour définissant la matrice orthogonale de transformation $Q\theta_{N+1,N+1}$ :

$$Q0_{N+1,N+1}(n) \begin{bmatrix} \lambda^{1/2}R_{N,N}(n-1) \\ x(n)x(n-1).......x(n-N+1) \end{bmatrix} = \begin{bmatrix} R_{N,N}(n) \\ 0_{1,N} \end{bmatrix}$$

Il est possible d'évaluer l'erreur résiduelle a posteriori e(n) qui est le dernier terme du vecteur E

$$e(n) = E^t_{n+1,1}(n)[O,........O,1]^t$$

qui peut également s'écrire, en désignant par Eq le vecteur résultant de la transformation orthogonale de E par Q :

$$e(n) = Eq^t_{n+1,1}(n).Q_{n+1,n+1}(n)[O,.....o,1]^t$$

On montre que e(n) est équivalent à :

$$e(n) = e_q(n)\ \gamma_{N-1}(n)\ 0$$

où eq est le dernier terme de Eq(n) $\gamma_{N-1}$ est égal à

$$\lambda 2(n) = e\ (n)/\varepsilon\ (n)$$

$$\gamma_{N-1}^{(n)} = \prod_{i=0}^{N-1} \cos\theta_i(n),$$

θ étant l'angle de rotation de Givens normalisé.

Un calcul d'erreur résiduelle a priori conduit de son côté à l'évaluer à $\varepsilon$ (n) = eq (n)/$\gamma$(n) et dans ce cas $\gamma$ est la racine carrée de la variable de vraisemblance.

Une estimation du dernier terme eq (n) du vecteur d'erreur après rotation pourra être la moyenne géométrique des erreurs a priori et a posteriori.

L'implémentation d'un algorithme rapide QR-RLS a déjà été proposée dans des domaines autres que l'annulation d'écho acoustique et ne sera donc pas décrite en détail. On pourra se reporter à ce sujet à des articles tels que :

Ling, "Givens Rotation Based Least-Squares Lattice and Related Algorithms", IEEE Trans. on Signal Processing. VOL. 39,No 7, Juillet 1991.

Regalia et al, "On the duality between fast QR methods and lattice methods in least square adaptive filtering" ieee Trans. on ASSP, VOL. 39, No 4, page 879-891, avril 1991.

B. Yang, J.F. Bôhme, "Rotation-Based RLS Algorithms: Unified Dérivations, Numerical Properties, and Parallel Implementations", IEEE Trans. on Signal Processing, VOL. 40, No 5, Mai 1992.

Les algorithmes dits "rapides" réduisent la complexité des filtres, qui est normalement de la forme o($N^2$), où N est l'ordre du filtre adaptatif, pour le ramener à approximativement o(N).

A ce sujet, il peut être utile de fournir quelques indications sur l'évolution de l'algorithme, de la complexité en o($N^2$) à la complexité en o(N).

La décomposition QR directe s'applique au facteur de Cholesky de la matrice d'autocorrélation, alors que la décomposition inverse est appliquée à l'inverse du facteur de Cholesky. Cette distinction est le point de départ des deux familles d'algorithmes des moindres carrés basés sur la décomposition QR.

Les algorithmes initiaux correspondants sont en o($N^2$), dénommés respectivement QR-RLS et IQR-RLS.

Pour chacune de ces deux familles existent des versions rapides en o(N), soit d'ordre fixe, soit récursives sur l'ordre.

On peut citer, dans le cas de la décomposition QR directe, l'algorithme de Cioffi, du type FQR-RLS (Fast-QR-RLS) d'ordre fixe, et l'algorithme de Regalia & Bellanger du type FQR-LSL (Fast-QR-Least-Square-Lattice) d'ordre récursif décrit dans l'article ci-dessus.

Dans le cas de la décomposition QR inverse, on peut trouver une dérivation pour chacun des cas (ordre fixe et ordre récursif) dans Theodoridis (ICASSP-95).

D'autre part, il existe un algorithme basé sur les méthodes QR mais utilisant la transformée de Householder au lieu des rotations de Givens, du type QR directe, en version rapide, mais qui se distingue des autres algorithmes précédemment cités par le fait qu'il identifie le filtre transverse. Un tel algorithme est décrit par Liu dans un article publié dans IEEE Trans. on SP, Mars 1995.

Seuls seront donc donnés ici des exemples de répartition des blocs fonctionnels nécessaires pour mettre en oeuvre des modes de réalisation particuliers.

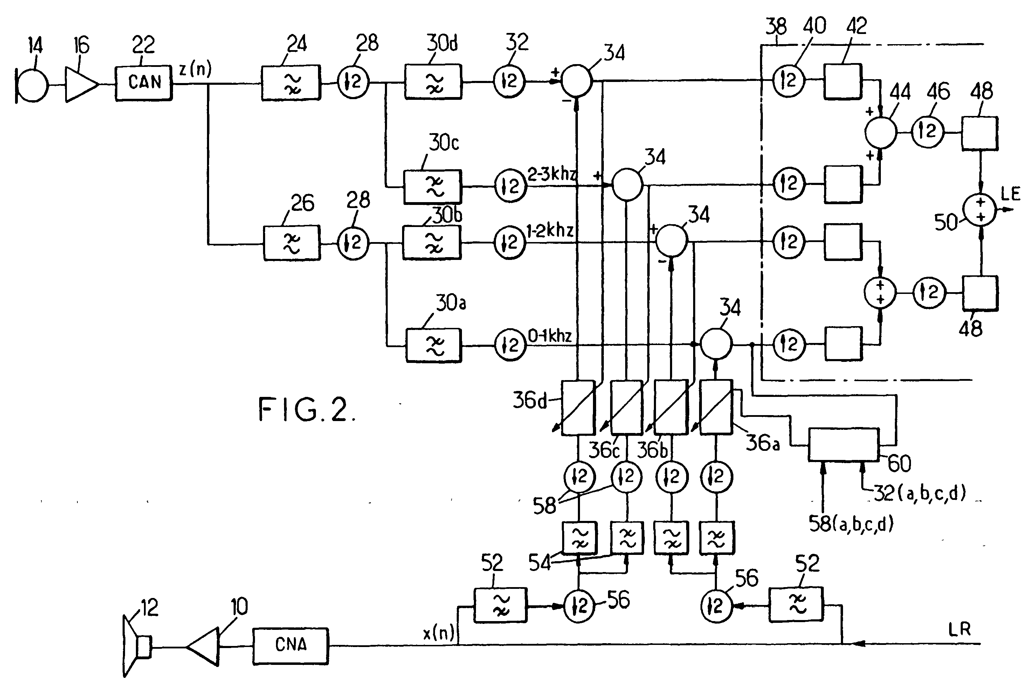

L'annuleur d'écho représenté schématiquement en figure 2 utilise un découpage en quatre sous-bandes. Les éléments correspondant à ceux de la figure 1 sont désignés par le même numéro de référence. On supposera par la suite que l'annuleur est destiné à une installation téléphonique mains-libres, destinée à fonctionner dans la bande allant de 300 Hz à 3,4 Khz, avec échantillonnage à 8 Khz, ceci ne restreignant pas l'utilisation d'un tel procédé à des terminaux mains-libres en bande élargie (16 Khz), ainsi que le nombre de sous-bandes nécessaires au traitement.

L'annuleur comprend un convertisseur analogique-numérique d'entrée 22, qui attaque deux filtres 24 et 26 montés en parallèle. Le filtré 24 est un filtre passe haut ou passe bande, ayant par exemple une fréquence de coupure basse d'environ 2 Khz. Le filtre 26 est un filtre passe bas, ayant sensiblement la même fréquence de coupure, de façon à éviter un recouvrement entre bandes. Chacun des filtres 24 et 26 est suivi d'un circuit de sous-échantillonnage 28, destiné à effectuer une décimation dans un rapport 2 et à orienter les échantillons vers l'un et l'autre de deux filtres d'analyse. On constitue ainsi, à l'aide des filtres 30a, 30b, 30c, et 30d, quatre sous-bandes qui vont par exemple respectivement jusqu'à 1 Khz, de 1 à 2 Khz, de 2 à 3 Khz, et de 3 à 4 Khz.

Les filtres 30 peuvent être de type classique. On peut notamment utiliser des filtres en quadrature conjugué, dits CQF, ou des filtres miroirs en quadrature, dits QMF, et des filtres à réponse impulsionnelle infinie, dits RII. On peut également utiliser des filtres à décomposition en ondelettes dits WDF, qui permettent un découpage plus fin.

Chacun des filtres 30 est suivi d'un sous-échantillonneur 32 et d'un soustracteur 34 qui reçoit la sortie d'un filtre d'annulation respective 36a, 36b, 36c, ou 36d.

Pour effectuer l'analyse et la synthèse en sous-bandes du signal, on peut utiliser des schémas de décomposition en sous-bandes et de recomposition autres que la recomposition en arbre binaire telle qu'elle a été décrite précédemment. Par exemple, on peut choisir des décompositions en bancs de filtres, modulés ou non, uniformes ou non, qui ne limitent pas le choix de la structure de la décomposition en sous-bande.

Comme on l'a indiqué plus haut, il sera souvent avantageux de n'effectuer un filtrage de type QR-RLS que dans la bande basse, c'est-à-dire dans les sous-bandes alimentées par les filtres 30a et 30b. En revanche, les filtres 36c et 36d (bandes hautes) peuvent mettre en oeuvre l'algorithme LMS normalisé, qui demande une puissance de calcul beaucoup plus faible, l'algorithme des moindres carrés à décomposition QR n'est mis en oeuvre que dans les deux sous-bandes médianes.

De façon plus générale, on pourra utiliser l'algorithme des moindres carrés à décomposition QR pour les filtres adaptatifs des sous-bandes à forte énergie du signal d'entrée et un algorithme moins complexe (NLMS par exemple) dans les sous-bandes d'énergie plus faible. Le choix peut être effectué après une analyse préalable du niveau moyen des énergies du signal d'entrée dans chacune des sous-bandes du type de décomposition considérée.

Les soustracteurs 34 attaquent un circuit de synthèse 38 symétrique des circuits d'analyse. Dans le cas illustré, il comporte des sur-échantillonneurs 40, opérant par adjonction de zéros et interpolation, des filtres passe-bandes 42, des additionneurs 44, un nouveau banc de suréchantillonneurs 46, deux filtres de sortie 48 et un additionneur 50 fournissant e (n).

Les filtres adaptatifs 36a à 36d qui attaquent l'entrée soustractive des soustracteurs 34 reçoivent le signal x (n) réparti en sous-bandes par l'intermédiaire de deux bancs de filtres successifs 52 et 54 et de deux bancs de sous-échantillonneurs 56 et 58 ayant les mêmes caractéristiques que les filtres et que les sous-échantillonneurs utilisés pour l'analyse de z (n). Le nombre total de prises des filtres adaptatifs, ou ordre des filtres, sera en général compris entre 64 et 256, ce dernier nombre étant révélé suffisant même dans le cas d'une installation de téléconférence dans une salle de grande dimension, avec des durées de réverbération longues, si dans ce dernier cas on utilise un niveau de décomposition en sous-bandes suffisant. La répartition des coefficients entre les différentes sous-bandes sera généralement égale, dans la mesure où toutes les sous-bandes mettent en oeuvre le même algorithme. En revanche, la complexité plus grande de l'algorithme QR-RLS pourra conduire à une répartition inégale entre les sous-bandes qui utilisent cet algorithme et les sous-bandes qui utilisent un algorithme conduisant à des calculs moins complexes. Si par exemple l'annuleur utilise un fractionnement en quatre sous-bandes, dont deux utilisent l'algorithme des moindres carrés à décomposition QR , seize coefficients peuvent être affectés à chacune de ces sous-bandes et trente deux coefficients aux deux autres sous-bandes. On rapproche ainsi les durées de calcul pour les divers filtres adaptatifs. En général, la mise en oeuvre pourra ainsi être effectuée en implémentant les filtres adaptatifs sur des processeurs de signaux disponibles à l'heure actuelle, sur le marché des composants.

Le facteur d'oubli de l'algorithme des moindres carrés à décomposition QR, qui intervient dans le calcul récursif peut être choisi à une valeur fixe. Dans la pratique, il est nécessaire que le facteur d'oubli soit supérieur à (n-1)/n, où n est le nombre de coefficients du filtre considéré.

Contrairement aux algorithmes RLS transverses rapides où la valeur du facteur d'oubli doit être suffisamment élevée pour qu'il n'y ait pas de divergence. Les algorithmes des moindres carrés à décomposition QR (version rapide ou non autorisent une plage de réglage du facteur d'oubli beaucoup plus souple sans risque de divergence ou d'instabilité.

Il est en conséquence préférable de munir les filtres de moyens d'adaptation du facteur d'oubli 60. Sur la figure 2, de tels moyens 60 sont représentés uniquement pour les filtres adaptatifs 36a et 36b. Les moyens d'adaptation peuvent être généralisés aux filtres 36c et 36d mettant en oeuvre l'algorithme NLMS, où un contrôle similaire du pas d'adaptation peut être nécessaire ou préférable.

Une stratégie qui est généralement avantageuse consiste à donner initialement à λ une valeur aussi faible que possible, pour accélérer la convergence, c'est-à-dire une valeur à peine supérieure à (n-1)/n = 15/16 = 0,93 dans le cas envisagé plus haut. Il peut être prévu une commande des moyens 60 par un détecteur de double parole et un détecteur de bruit environnant, sensible par exemple à un niveau de signal z (n), rapporté au niveau du signal x(n) supérieur à un seuil déterminé. L'adoption d'une valeur λ proche de 1 en cas de détection de double parole permet en effet de réduire les perturbations dues au locuteur local dans l'adaptation, étant donné la rémanence qu'elle introduit.

Une autre stratégie encore de choix de λ consiste à mémoriser, dans les moyens 60, une loi de choix de λ entre quelques valeurs, depuis (n-1)/n jusqu'à une valeur proche de 1, par exemple en fonction de l'énergie du signal.

Les moyens 60 utilisés pour le réglage ou ajustage des paramètres de l'algorithme des moindres carrés à décomposition QR, tels que le facteur d'oubli λ et l'ordre du filtre peuvent être fondés, soit sur des principes simples de critères énergétiques, soit sur des calculs de distorsions spectrales paramétriques ou non (par exemple, la distance d'Itakura, les distances cepstrales entre les voies du signal entrant prises en sortie de 58 (a,b,c, et d) et les voies du signal sortant de 32 (a,b,c,d) respectivement. Les moyens 60 peuvent être également utilisés pour l'ajustage du pas d'adaptation de l'algorithme NLMS.

Il est apparu qu'une augmentation du nombre de prises ne donne pas d'amélioration notable en matière d'annulation d'écho, sauf lorsqu'on dépasse un nombre de prises d'environ 1000, ce qui se traduit par une complexité de calcul et une cadence d'échantillonnages excessives.

Quant aux filtres mettant en oeuvre l'algorithme NLMS dans certaines sous-bandes, ils comportent avantageusement des moyens d'ajustage du pas d'adaptation ou pas de convergence.

Des moyens non représentés peuvent également être prévus pour régler automatiquement l'ordre du filtre dans chaque sous-bande en fonction de l'énergie du signal x(n) d'entrée dans chacune des sous-bandes, de façon à assurer une meilleure robustesse en double parole et en présence de bruit. Une stratégie de sélection de l'ordre des filtres est la suivante : pour un signal d'énergie nul dans une sous-bande, les moyens d'ajustement réduisent à zéro l'ordre du filtre. Lorsque le signal dépasse un seuil, correspondant pratiquement à l'énergie maximale envisagée dans la sous-bande, les moyens d'ajustage donnent au filtre correspondant un ordre maximal. Pour des énergies intermédiaires, l'ordre des filtres peut être réglé en plusieurs pas successifs, simulant par exemple une loi de variation exponentielle similaire à celle de la réponse impulsionnelle acoustique.

L'invention permet d'arriver à une efficacité, mesurée dans les conditions fixées par la norme ERLE (Echo Return Loss Enhancement) d'environ 30 dB pour 256 prises. Un doublement du nombre de prises n'apporte pas d'amélioration notable.

L'invention ne se limite pas au mode particulier de réalisation qui a été décrit à titre d'exemple. En particulier, le nombre de sous-bandes peut être différent, bien qu'il soit en règle général inutile d'aller au-delà de seize sous-bandes en bande étroite et 32 en bande élargie. Il est également possible d'utiliser différents algorithmes avec une répartition différente de celle qui a été donnée plus haut.

## Revendications

1. Annuleur d'écho destiné à être placé entre une interface acoustique mains libres et un réseau de communication, comprenant des premiers moyens (24, 28, 30a-30d, 32) de décomposition en sous-bandes d'un signal, affecté d'écho, à émettre après correction d'écho, des seconds moyens (52, 54, 56, 58) de décomposition en sous-bandes d'un signal entrant provenant du réseau, et plusieurs voies de traitement montées en parallèles, et affectées chacune à l'une de plusieurs sous-bandes adjacentes de la bande spectrale d'un signal de sortie, allant vers le réseau, chaque voie affectée à une sous-bande comprenant un filtre adaptatif (36) recevant une composante du signal entrant, issue des seconds moyens de décomposition, et fournissant un écho estimé dans ladite sous-bande, et un soustracteur (34) ayant une entrée recevant une composante du signal affecté d'écho, issue des premiers moyens de décomposition et une entrée soustractive recevant l'écho estimé issu du filtre adaptatif de ladite voie, l'annuleur d'écho comprenant en outre des moyens de synthèse (38) pour construire le signal de sortie à partir de composantes spectrales délivrées par les soustracteurs des voies de traitement, **caractérisé en ce que** le filtre adaptatif d'au moins une des voies de traitement met en oeuvre un algorithme des moindres carrés à décomposition QR du signal entrant, en version rapide, récursif sur l'ordre ou non récursif sur l'ordre, tandis que le filtre adaptatif d'au moins une autre voie de traitement met en oeuvre un algorithme moins complexe.

2. Annuleur d'écho selon la revendication 1, **caractérisé en ce que** seuls les filtres adaptatifs des voies de traitement affectées aux sous-bandes à plus forte énergie du signal d'entrée mettent en oeuvre ledit algorithme à décomposition QR, les filtres adaptatifs des voies de traitement affectées aux autres sous-bandes mettant en oeuvre un algorithme moins complexe.

3. Annuleur d'écho selon la revendication 1, **caractérisé en ce que** seuls les filtres adaptatifs des voies de traitement affectées aux sous-bandes à basse fréquence mettent en oeuvre ledit algorithme à décomposition QR, les autres filtres adaptatifs mettant en oeuvre un algorithme de moindre complexité, tel que l'algorithme du gradient stochastique normalisé NLMS.

4.  Annuleur d'écho selon la revendication 1 **caractérisé en ce que** les filtres adaptatifs des voies de traitement affectées à des sous-bandes médianes mettent en oeuvre ledit algorithme à décomposition QR, les autres filtres adaptatifs mettant en oeuvre l'algorithme des moindres carrés normalisés, ou l'algorithme du gradient stochastique normalisé.

5.  Annuleur d'écho selon l'une quelconque des revendications 1 à 4, **caractérisé en que** les filtres adaptatifs mettant en oeuvre ledit algorithme à décomposition QR comportent des moyens de réglage d'un facteur d'oubli.

6.  Annuleur d'écho selon la revendication 5, **caractérisé en ce que** les moyens de réglage sont prévus pour faire varier le facteur d'oubli entre une valeur maximale en présence de double parole ou de bruit acoustique élevé et une valeur plus faible en présence de simple parole.

7.  Annuleur d'écho selon la revendication 5 ou 6, **caractérisé en ce que** les moyens de réglage sont prévus pour faire varier le facteur d'oubli entre une valeur initiale minimale supérieure à (n-1)/n, où n est le nombre de prises du filtre, et une valeur maximale proche de 1, en cas de détection de double parole.

8.  Annuleur d'écho selon l'une quelconque des revendications précédentes, **caractérisé par** des moyens pour ajuster automatiquement l'ordre des filtres récursifs sur l'ordre des sous-bandes en fonction croissante de l'énergie du signal x(n) entrant dans chaque sous-bande.

9.  Annuleur d'écho selon la revendication 8, **caractérisé en ce que** lesdits moyens pour ajuster automatiquement l'ordre des filtres sont agencés pour réduire l'ordre du filtre d'une sous-bande à 0 lorsque le signal entrant a une énergie nulle dans cette sous-bande et pour fixer l'ordre des filtres à une valeur maximale lorsque le signal entrant dépasse une valeur prédéterminée, en réglant l'ordre du filtre, pour les énergies intermédiaires, par pas successifs selon une loi de variation exponentielle moyenne similaire à celle de la réponse impulsionnelle acoustique.

**Patentansprüche**

1.  Echokompensator, der dazu bestimmt ist, zwischen einer akustischen Freisprechschnittstelle und einem Kommunikationsnetz angeordnet zu werden, umfassend erste Mittel (24, 28, 30a-30d, 32) zum Zerlegen eines mit einem Echo behafteten Signals in Unterbänder, das nach der Echokorrektur auszusenden ist, zweite Mittel (52, 54, 56, 58) zum Zerlegen eines vom Netz kommenden Eingangssignals in Unterbänder, mehrere Verarbeitungskanäle, die parallel geschaltet sind und jeweils einem der mehreren benachbarten Unterbänder des Spektralbands eines zum Netz gehenden Ausgangssignals zugeordnet sind, wobei jeder jeweils einem Unterband zugeordnete Kanal ein adaptives Filter (36) aufweist, das eine Komponente des Eingangssignals empfängt, die von den zweiten Mitteln zum Zerlegen kommt, und ein in diesem Unterband geschätztes Echo liefert, sowie ein Subtrahierglied (34), von dem ein Eingang eine Komponente des mit einem Echo behafteten Signals empfängt, die von den ersten Mitteln zum Zerlegen kommt, und ein Subtrahiereingang das geschätzte Echo empfängt, das vom adaptiven Filter des Kanals kommt, wobei der Echokompensator außerdem Synthesemittel (38) aufweist, um das Ausgangssignal ausgehend von spektralen Komponenten zu konstruieren, die von den Subtrahiergliedern der Verarbeitungskanäle geliefert werden, **dadurch gekennzeichnet, dass** das adaptive Filter mindestens eines der Verarbeitungskanäle einen Algorithmus der kleinsten Fehlerquadrate zur QR-Zerlegung des Eingangssignals in der schnellen Version, rekursiv bezüglich des Rangs oder nicht rekursiv bezüglich des Rangs, anwendet, während das adaptive Filter mindestens eines anderen Verarbeitungskanals einen weniger komplexen Algorithmus anwendet.

2.  Echokompensator nach Anspruch 1, **dadurch gekennzeichnet, dass** nur die adaptiven Filter der Verarbeitungskanäle, die den Unterbändern größerer Eingangssignalstärke zugeteilt sind, den Algorithmus zur QR-Zerlegung anwenden, während die den anderen Unterbändern zugeteilten adaptiven Filter der Verarbeitungskanäle einen weniger komplexen Algorithmus anwenden.

3.  Echokompensator nach Anspruch 1, **dadurch gekennzeichnet, dass** nur die den Unterbändern niedriger Frequenz zugeteilten adaptiven Filter der Verarbeitungskanäle den Algorithmus zur QR-Zerlegung anwenden, während die anderen adaptiven Filter einen weniger komplexen Algorithmus anwenden, wie zum Beispiel den normierten stochastischen Gradientenalgorithmus NLMS.

4.  Echokompensator nach Anspruch 1, **dadurch gekennzeichnet, dass** die adaptiven Filter der mittleren Unterbändern zugeteilten Verarbeitungskanäle den Algorithmus zur QR-Zerlegung anwenden, während die anderen adaptiven Filter den normierten Algorithmus der kleinsten Fehlerquadrate oder den normierten stochastischen Gradientenalgorithmus anwenden.

**5.** Echokompensator nach einem der Ansprüche 1 bis 4, **dadurch gekennzeichnet, dass** die den Algorithmus zur QR-Zerlegung anwendenden adaptiven Filter Mittel zur Regelung eines Vergessensfaktors aufweisen.

**6.** Echokompensator nach Anspruch 5, **dadurch gekennzeichnet, dass** die Regelmittel vorgesehen sind, um den Vergessensfaktor zwischen einem maximalen Wert bei Vorhandensein von Doppelsprechen oder einem starken akustischen Rauschen und einem geringeren Wert in Gegenwart eines einfachen Sprechens variieren zu lassen.

**7.** Echokompensator nach Anspruch 5 oder 6, **dadurch gekennzeichnet, dass** die Regelmittel vorgesehen sind, um den Vergessensfaktor zwischen einem minimalen Anfangswert größer als {n-1)/n, wobei n die Anzahl von Abgriffen des Filters ist, und einem maximalen Wert nahe 1 im Fall der Erfassung eines Doppelsprechens variieren zu lassen.

**8.** Echokompensator nach einem der vorhergehenden Ansprüche, **gekennzeichnet durch** Mittel zur automatischen Anpassung des Rangs der rekursiven Filter an den Rang der Unterbänder in zunehmender Abhängigkeit von der Signalstärke x(n) in jedem Unterband.

**9.** Echokompensator nach Anspruch 8, **dadurch gekennzeichnet, dass** die Mittel zur automatischen Anpassung des Rangs der Filter so ausgebildet sind, dass sie den Rang des Filters eines Unterbands auf 0 reduzieren, wenn das Eingangssignal die Stärke Null in diesem Unterband hat, und dass sie den Rang der Filter auf einen maximalen Wert festlegen, wenn das Eingangssignal einen vorbestimmten Wert überschreitet, indem der Rang des Filters für die mittleren Energiewerte in aufeinander folgenden Schritten gemäß einem Gesetz der mittleren exponentialen Variation ähnlich derjenigen der akustischen Impulsantwort geregelt wird.

**Claims**

**1.** An echo canceller designed to be placed between a hands-free acoustical interface and a communications network, the canceller comprising first subband decomposition means (24, 28, 30a-30d, 32) for decomposing an echo-containing signal for transmitting after echo correction, second subband decomposition means (52, 54, 56, 58) for decomposing an input signal coming from the network, and a plurality of processing paths connected in parallel and each allocated to each one out of a plurality of adjacent subbands of the spectrum band of the output signal going to the network, each path allocated to a subband comprising an adaptive filter (36) receiving a component of the incoming signal coming from the second decomposition means and supplying an estimated echo in said subband, and a subtracter (34) having an input receiving a component of the echo-containing signal coming from the first decomposition means, and a substractive input receiving the estimated echo coming from the adaptive filter of said path, the echo canceller further comprising synthesis means (38) for building up the output signal from spectral components supplied by the subtracters of the processing paths, the canceller being **characterized in that** the adaptive filters in at least one of the processing paths implement a QR decomposition least squares algorithm on the incoming signal, using a fast version thereof which is recursive on order or non-recursive on order, while the adaptive filter of at least one other processing path implements an algorithm that is less complex.

**2.** An echo canceller according to claim 1, **characterized in that** only the adaptive filters of the processing paths allocated to the highest energy subbands in the incoming signal implement said QR decomposition algorithm, the adaptive filters of the processing paths allocated to the other subbands implementing an algorithm that is less complex.

**3.** An echo canceller according to claim 1, **characterized in that** only the adaptive filters of the processing paths allocated to the low frequency subbands implement said QR decomposition algorithm, the other adaptive filters implementing a less complex algorithm, such as the normalized stochastic gradient NLMS algorithm.

**4.** An echo canceller according to claim 1, **characterized in that** the adaptive filters of the processing paths allocated to the mid subbands implement said QR decomposition algorithm, the other adaptive filters implementing the normalized least squares algorithm or the normalized stochastic gradient algorithm.

**5.** A canceller according to any one of claims 1 to 4, **characterized in that** the adaptive filters implementing said QR decomposition algorithm include adjusting means for adjusting the forgetting factor.

6. An echo canceller according to claim 5, **characterized in that** the adjusting means are provided to vary the forgetting factor between a maximum value in the presence of high acoustical noise or double speech, and a smaller value in the presence of single speech.

7. An echo canceller according to claim 5 or 6, **characterized in that** the adjusting means are provided for varying the forgetting factor between a minimum initial value that is greater than (n-1)/n where $\underline{n}$ is the number of filter taps, and a maximum value close to 1, in the event of double speech being detected.

8. An echo canceller according to any preceding claim, **characterized by** means for automatically adjusting the order of recursive filters on the order of the subbands as an increase in function of energy in the signal x(n) input to each subband.

9. An echo canceller according to claim 8, **characterized in that** said means for automatically adjusting the order of the filters are arranged to reduce the order of the filter of a subband to zero when the energy of the incoming signal is zero in said subband, and to set the order of filters to a maximum value when the incoming signal exceeds a predetermined value, with the order of the filter at intermediate energies being adjusted by successive steps in application of a mean exponential relationship similar to that of the acoustical impulse response.

# FIG.1.

FIG.2.

EP 0 748 555 B1